(19) Europäisches Patentamt European Patent Office Office européen des brevets

(11) **EP 4 432 218 B1**

(12) **EUROPEAN PATENT SPECIFICATION**

(45) Date of publication and mention of the grant of the patent:
**01.07.2026 Bulletin 2026/27**

(21) Application number: **22892401.5**

(22) Date of filing: **12.09.2022**

(51) International Patent Classification (IPC):
*G06T 7/00* (2017.01)   *G06N 3/08* (2023.01)
*G06N 3/045* (2023.01)   *G06V 10/25* (2022.01)
*G06V 10/764* (2022.01)   *G06V 10/774* (2022.01)
*G06V 10/82* (2022.01)

(52) Cooperative Patent Classification (CPC):
**G06V 10/25; G06N 3/045; G06N 3/08;**
**G06T 7/0004; G06V 10/764; G06V 10/774;**
**G06V 10/82;** G06T 2207/20081; G06T 2207/20084

(86) International application number:
**PCT/JP2022/034032**

(87) International publication number:
**WO 2023/084900 (19.05.2023 Gazette 2023/20)**

(54) **LEARNING METHOD, LEARNING DEVICE, LEARNING PROGRAM, AND IMAGE PROCESSING DEVICE**

LERNVERFAHREN, LERNVORRICHTUNG, LERNPROGRAMM UND BILDVERARBEITUNGSVORRICHTUNG

PROCÉDÉ D'APPRENTISSAGE, DISPOSITIF D'APPRENTISSAGE, PROGRAMME D'APPRENTISSAGE ET DISPOSITIF DE TRAITEMENT D'IMAGES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.11.2021 JP 2021183029**

(43) Date of publication of application:
**18.09.2024 Bulletin 2024/38**

(73) Proprietor: **FUJIFILM Corporation Tokyo 106-8620 (JP)**

(72) Inventor: **IKEDA, Haruka Tokyo 106-8620 (JP)**

(74) Representative: **Meissner Bolte Partnerschaft mbB Patentanwälte Rechtsanwälte Postfach 86 06 24 81633 München (DE)**

(56) References cited:
WO-A1-2020/031851   CN-A- 112 991 344
JP-A- 2020 080 047   JP-A- 2021 086 350
JP-A- 2021 139 769   JP-A- 2021 148 720

- DU WANGZHE ET AL: "Automatic Defect Segmentation in X-Ray Images Based on Deep Learning", IEEE TRANSACTIONS ON INDUSTRIAL ELECTRONICS, IEEE SERVICE CENTER, PISCATAWAY, NJ, USA, vol. 68, no. 12, 31 December 2020 (2020-12-31), pages 12912 - 12920, XP011875355, ISSN: 0278-0046, [retrieved on 20210831], DOI: 10.1109/TIE.2020.3047060
- ZHOU WEIYU ET AL: "MDD-Net: A novel defect detection model of material microscope image", 2020 INTERNATIONAL CONFERENCE ON HIGH PERFORMANCE BIG DATA AND INTELLIGENT SYSTEMS (HPBD&IS), IEEE, 23 May 2020 (2020-05-23), pages 1 - 6, XP033787308, DOI: 10.1109/HPBDIS49115.2020.9130591

**Description**

**BACKGROUND OF THE INVENTION**

1. Field of the Invention

The present invention relates to a learning method, a learning apparatus, and a learning program for performing learning of an image, and an image processing apparatus using a trained model constructed by the learning.

2. Description of the Related Art

With regard to the technique of performing learning of an image, for example, JP2020-061066A and JP2020-091543A describe that learning based on cross-entropy loss is performed.
Reference is also made to the following prior art documents:

DU WANGZHE ET AL: "Automatic Defect Segmentation in X-Ray Images Based on Deep Learning",IEEE TRANSACTIONS ON INDUSTRIAL ELECTRONICS, IEEE SERVICE CENTER,
PISCATAWAY, NJ, USA, vol. 68, no. 12, 31 December 2020. The document discloses a defect segmentation method using a U-Net with ResNet101, enhanced by a two-stream CNN (original and CLAHE images), multilevel feature fusion, and pyramid pooling. Training uses a weighted IoU loss that assigns different weights to regions based on IoU thresholds, combining region-level and pixel-level loss to guide learning.
ZHOU WEIYU ET AL: "MDD-Net: A novel defect detection model of material microscope image",2020 INTERNATIONAL CONFERENCE ON HIGH PERFORMANCE BIG DATA AND INTELLIGENT SYSTEMS (HPBD&IS), IEEE, 23 May 2020. The document discloses an object detection method based on Faster R-CNN with FPN, modified by using dilated convolution to preserve resolution, deformable convolution to handle irregular shapes, and focal loss to weight training samples based on class imbalance and difficulty during model training.

**SUMMARY OF THE INVENTION**

The present invention provides a learning method, a learning apparatus, and a learning program that can obtain a learning model having a good detection rate, and an image processing apparatus that can detect a scratch and/or a defect of a subject with a good accuracy by using a trained model.
The invention is set out in the appended set of claims.
In order to achieve the above-described object, a first aspect of the present invention relates to a learning method executed by a learning apparatus including a processor, the learning method comprising: causing the processor to execute: a data acquisition step of acquiring learning data consisting of a pair of a patch image and correct answer data of a class label for a unit region of the patch image; a determination step of performing segmentation of the patch image by using a learning model and the learning data, and determining, for each patch image, whether or not a second unit region is correctly detected by the learning model; a weighting step of setting a first weight in learning based on a result of the determination; and an update step of updating the learning model based on a result of the weighting.
A second aspect relates to the learning method according to the first aspect, in which, in the weighting step, the processor sets the first weight in a unit of the patch image for a first loss that is a loss for each individual patch image.
A third aspect relates to the learning method according to the first or second aspect, in which, in the weighting step, the processor sets, as the first weight, a larger weight in a case in which it is determined that the second unit region is not correctly detected than in a case in which it is determined that the second unit region is correctly detected.
A fourth aspect relates to the learning method according to any one of the first to third aspects, in which, in the determination step, the learning model detects the second unit region belonging to a specific class.
A fifth aspect relates to the learning method according to the fourth aspect, in which, in the determination step, the processor determines that the second unit region is not correctly detected in a first case in which the second unit region belonging to the specific class is erroneously detected by the learning model and in a second case in which the second unit region belonging to the specific class is not detectable by the learning model.
A sixth aspect relates to the learning method according to the fifth aspect, in which, in the weighting step, the processor sets a larger weight in the second case than in the first case.
A seventh aspect relates to the learning method according to the fifth or sixth aspect, in which, in the determination step, the processor determines that a result of the detection is correct in a third case in which the result of the detection is neither the first case nor the second case.
An eighth aspect relates to the learning method according to any one of the fourth to seventh aspects, in which, in the determination step, the processor performs the determination on a scratch and a defect of a subject.

A ninth aspect relates to the learning method according to any one of the fourth to eighth aspects, in which the learning model outputs a certainty of the detection, and in the determination step, the processor determines whether or not the second unit region belongs to the specific class based on whether or not the certainty is equal to or higher than a threshold value.

A tenth aspect relates to the learning method according to the ninth aspect, in which the processor changes the threshold value in a process of learning.

An eleventh aspect relates to the learning method according to any one of the first to tenth aspects, in which, in the weighting step, the processor performs the weighting on a cross-entropy loss of the patch image.

A twelfth aspect relates to the learning method according to any one of the first to eleventh aspects, in which the processor further executes a loss function derivation step of deriving a loss function for a batch composed of the patch images, and updates the learning model by using the loss function in the update step.

A thirteenth aspect relates to the learning method according to the twelfth aspect, in which, in the loss function derivation step, the processor derives, as the loss function, a first loss function obtained by averaging the result of the weighting over an entire batch composed of the patch images.

A fourteenth aspect relates to the learning method according to the thirteenth aspect, in which, in the loss function derivation step, the processor uses, as the loss function, a function in which the first loss function and a second loss function, which is a loss function for the batch and is different from the first loss function, are combined.

A fifteenth aspect relates to the learning method according to any one of the first to fourteenth aspects, in which, in the update step, the processor updates a parameter of the learning model to minimize the loss function.

A sixteenth aspect relates to the learning method according to any one of the first to fifteenth aspects, in which, in the data acquisition step, the processor inputs an image to acquire a divided image of the input image as the patch image.

A seventeenth aspect relates to the learning method according to any one of the first to sixteenth aspects, in which, in the data acquisition step, the processor acquires the patch image of a size corresponding to a size of a scratch and/or a defect of a subject to be detected.

An eighteenth aspect relates to the learning method according to any one of the first to seventeenth aspects, in which the learning model includes a neural network that performs the segmentation.

In order to achieve the above-described object, a nineteenth aspect relates to a learning apparatus comprising: a processor, in which the processor executes: data acquisition processing of acquiring learning data consisting of a pair of a patch image and correct answer data of a class label for a unit region of the patch image; determination processing of performing segmentation of the patch image by using a learning model and the learning data, and determining, for each patch image, whether or not a second unit region is correctly detected by the learning model; a weighting processing of setting a first weight based on a result of the determination; and update processing of updating the learning model based on a result of the weighting. The learning apparatus according to the nineteenth aspect may have a configuration in which the same processing as the processing according to the second to eighteenth aspects is executed.

In order to achieve the above-described object, a twentieth aspect of the present invention relates to a learning program causing a learning apparatus including a processor to execute a learning method comprising: causing the processor to execute: a data acquisition step of acquiring learning data consisting of a pair of a patch image and correct answer data of a class label for a unit region of the patch image; a determination step of performing segmentation of the patch image by using a learning model and the learning data, and determining, for each patch image, whether or not a second unit region is correctly detected by the learning model; a weighting step of setting a first weight based on a result of the determination; and an update step of updating the learning model based on a result of the weighting. The learning program according to the twentieth aspect may have a configuration in which the same processing as the processing according to the second to eighteenth aspects is executed. In addition, a non-transitory recording medium on which a computer-readable code of the learning program according to these aspects is recorded is also included in a range of the present invention.

In order to achieve the above-described object, a twenty-first aspect of the present invention relates to an image processing apparatus comprising: a trained model that has been trained by the learning method according to any one of the first to eighteenth aspects, in which the trained model is used to detect a scratch and/or a defect of a subject from an input image.

## BRIEF DESCRIPTION OF THE DRAWINGS

Fig. 1 is a diagram showing a schematic configuration of a learning apparatus.

Fig. 2 is a diagram showing a schematic configuration of a processing unit.

Figs. 3A and 3B are diagrams showing a state of processing by a convolutional neural network.

Fig. 4 is another diagram showing a state of processing by the convolutional neural network.

Fig. 5 is a flowchart showing an overview of processing of a learning method.

Fig. 6 is a flowchart showing details of the processing of the learning method.

Figs. 7A and 7B are diagrams showing an influence of weighting on learning.

Fig. 8 is a flowchart showing processing of acquiring a patch image.

Fig. 9 is a flowchart showing a variation of weighting processing.

Figs. 10A and 10B are diagrams showing a state in which a part of a large defect is not detected.

Figs. 11A and 11B are diagrams showing a state in which an entire small defect is not detected.

## DESCRIPTION OF THE PREFERRED EMBODIMENTS

[Detection rate in learning of segmentation]

As an example of segmentation (class classification) by the related-art method, a case will be described in which a defect of a subject is detected.

In semantic segmentation in machine learning, cross-entropy loss is generally used. For each pixel of an image that is a target for the class classification, a penalty (= loss) derived from a difference between a correct answer label (p = 0 or 1) and a prediction value ($0 \le q \le 1$) of the learning model is given, and the learning model is updated by the loss. For example, in a case of a defect detection task, p = 1 can be associated with "defect" and p = 0 can be associated with "non-defect". It should be noted that, in the following description, the cross-entropy loss may be referred to as a "CE loss".

A small detection target and a large detection target may simultaneously exist in the same class to be classified as a segmentation task. That is, in a case of the defect detection, a small defect and a large defect may coexist. However, in the general CE loss, since the prediction is performed for each pixel and the predictions are treated equivalently, the learning frequency is higher as the defect is larger, while a small defect is more difficult to be learned.

The CE loss is represented by Expressions (1) and (2) in a case in which the correct answer label in a case of performing the binary classification of {defect, non-defect} for each pixel is $p \in \{0, 1\}$ and the output value representing the defect probability is $q \in [0, 1]$.

$$\text{CE}(p,q) = -\left( p\log(q) + (1-p)\log(1-q) \right) \qquad \cdots \ (1)$$

$$L_{\text{CE}} = \frac{1}{N}\sum_{i=1}^{B} \sum_{(x,y)\in \text{I}_i} \text{CE}(p, q) \qquad \cdots \ (2)$$

Expression (1) is defined for each pixel. The CE loss depends on the coordinates (x, y) of the pixels constituting each input patch image Ii ($1 \le i \le B$) in a case in which the number of batches, which is a unit for updating a weight of a model, is B, but the subscripts are abbreviated. Expression (2) means that an average (the number of pixels N: = B × H × W, in which H and W are the sizes of the input patch image) with respect to these is taken, and the pixels in the image are learned equivalently.

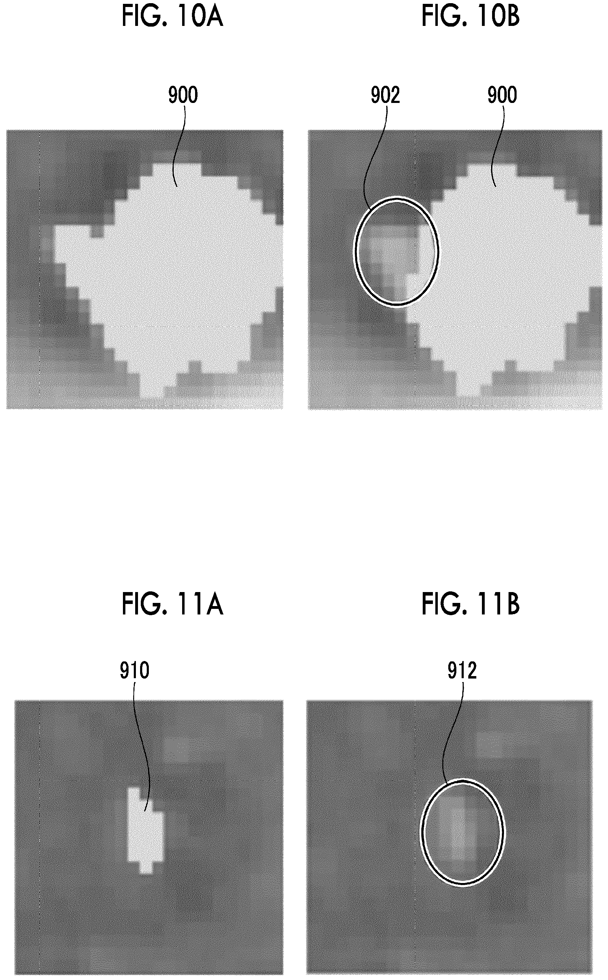

For example, there are (i) a portion (region 902 in Fig. 10B) in which several pixels of a large defect 900 (see Fig. 10A) are not detected as shown in Figs. 10 and (ii) a portion (region 912 in Fig. 11B) in which the entire small defect 910 (see Fig. 11A) consisting of several pixels is not detected as shown in Figs. 11A and 11B, in a case in which the number of undetected pixels is the same in the region 902 of (i) and the region 912 of (ii), the contribution to the loss function is also the same. However, from the viewpoint of evaluating the detection rate, it is preferable that a case of detecting the defect (small defect 910) that is not detected at all as in (ii) is given priority over a case of reproducing the detailed shape of the defect (large defect 900) for which the detection is successful as in (i).

As described above, in the task in which detection targets of different sizes are mixed, in a case in which it is important to prevent overlooking even in a case of a small size and to improve the number-based detection rate, it is preferable to set a loss for improving the detection rate more directly because it is not possible to take the prevention of overlooking and the improvement of the number-based detection rate into consideration with the loss function in the related art as described above.

The present inventors have made intensive studies under such circumstances, and have conceived a learning method, a learning apparatus, and a learning program that can obtain a learning model having a good detection rate, and an image processing apparatus having a good detection rate of a scratch and/or a defect of a subject. Hereinafter, embodiments of the present invention based on such an idea will be described. The accompanying drawings will be referred to in the description, as necessary. It should be noted that, in the accompanying drawings, the description of some components may be omitted for convenience of description.

[Configuration of learning apparatus]

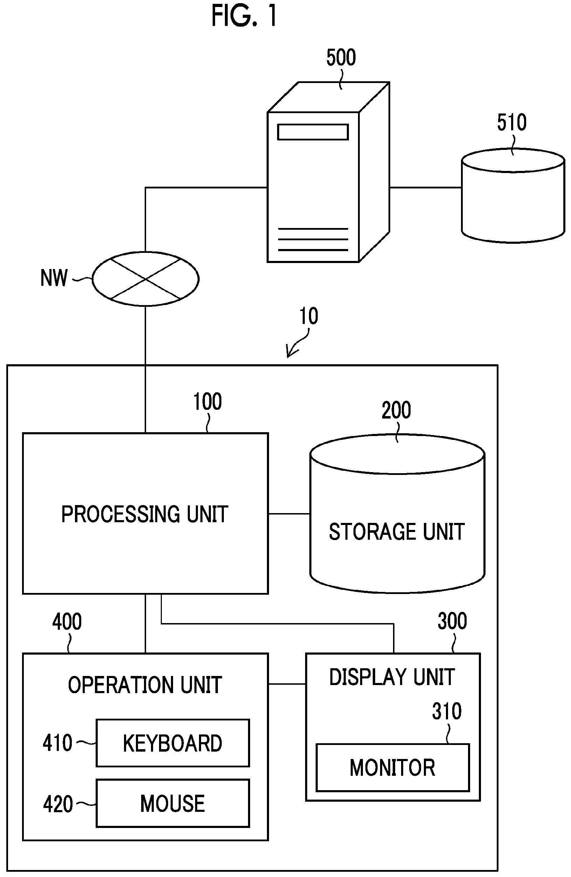

Fig. 1 is a diagram showing a schematic configuration of a learning apparatus (image processing apparatus) according to the embodiment of the present invention. As shown in Fig. 1, a learning apparatus 10 (learning apparatus, image processing apparatus) according to a first embodiment comprises a processing unit 100 (processor, computer), a storage unit 200, a display unit 300, and an operation unit 400, and these components are connected to each other to transmit and receive necessary information. These components can be installed by employing various forms, and the components may be installed in one site (in one housing, one room, or the like) or may be installed in places separated from each other and connected via a network. In addition, the learning apparatus 10 can be connected to an external server 500 and/or an external database 510 via a network NW, such as the Internet, can acquire a sample or learning data to be used for processing as necessary, and can store a processing result or the like in the external server 500 and/or the external database 510.

[Configuration of processing unit]

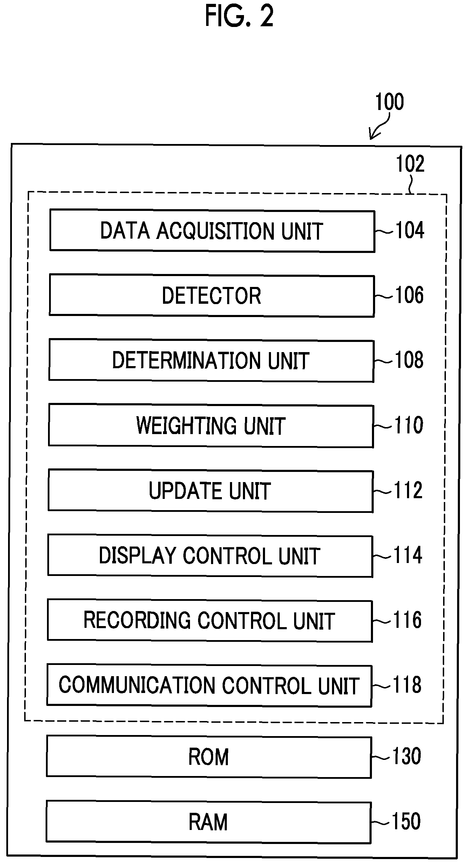

As shown in Fig. 2, the processing unit 100 comprises a processor 102 (processor, computer), a read only memory 130 (ROM), and a random access memory 150 (RAM). The processor 102 integrally controls the processing performed by each unit of the processing unit 100, and has functions of a data acquisition unit 104, a detector 106, a determination unit 108, a weighting unit 110, an update unit 112, a display control unit 114, a recording control unit 116, and a communication control unit 118. The data acquisition unit 104 can perform the input via the network NW or from a recording medium, such as the storage unit 200, and the display control unit 114 and the recording control unit 116 can perform the display on a monitor 310 and the output to the storage unit 200, respectively. These pieces of processing are performed as necessary via the communication control unit 118.

[Configuration of detector]

The detector 106 (processor) comprises a learning model, and the learning model comprises a neural network that performs the segmentation. As the neural network, for example, a convolutional neural network (CNN), a recurrent neural network (RNN), or a support vector machine (SVM) can be used. As will be described below, a parameter of the learning model is updated by the learning method according to the aspect of the present invention. It should be noted that the detector 106 (trained model) after the learning ends can be used to detect a scratch and/or a defect from an image of a subject. That is, the learning apparatus 10 after the learning ends operates as the image processing apparatus according to the aspect of the present invention (described below).

[Example of layer configuration of CNN]

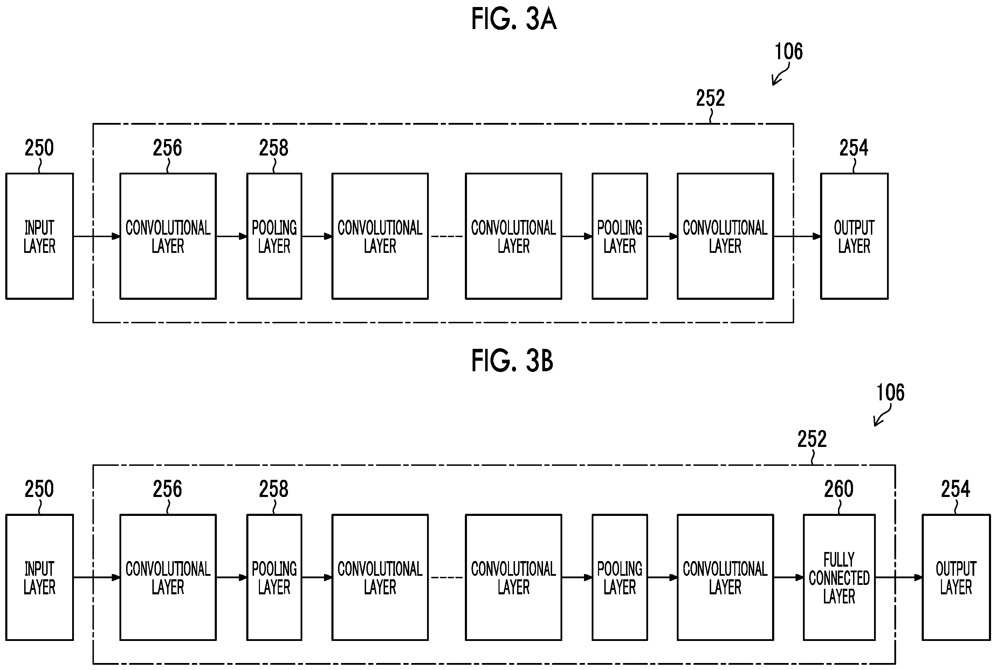

An example of a layer configuration in a case in which the CNN (an example of a learning model) is used in the detector 106 will be described. Figs. 3A and 3B are diagrams showing an example of a layer configuration of a learning model 224. In the example shown in Fig. 3A, the learning model 224 includes an input layer 250, an intermediate layer 252, and an output layer 254. The input layer 250 inputs an image (patch image) acquired by the data acquisition unit 104 and outputs a feature value. The intermediate layer 252 includes a convolutional layer 256 and a pooling layer 258, and the feature value output by the input layer 250 is input to calculate another feature value. These layers have a structure in which a plurality of "nodes" are connected by "edges", and store a plurality of weight parameters. A value of the weight parameter is changed as the learning progresses. As in the example shown in Fig. 3B, the learning model 224 may include a fully connected layer 260. The layer configuration of the learning model 224 is not limited to a case in which the convolutional layer 256 and the pooling layer 258 are repeated one by one, and a plurality of layers (for example, the convolutional layer 256) may be continuously included. A plurality of fully connected layers 260 may be continuously included.

[Processing in intermediate layer]

The intermediate layer 252 calculates the feature value by a convolution operation and pooling processing. The convolution operation performed in the convolutional layer 256 is processing of acquiring a feature map by a convolution operation using filters, and plays a role of feature extraction such as edge extraction from the image. By the convolution operation using the filters, the "feature map" of one channel (one piece) is generated for one filter. The size of the "feature map" is downscaled by the convolution and is smaller as the convolution in each layer progresses. The pooling processing performed by the pooling layer 258 is processing of reducing (or enlarging) the feature map output by the convolution operation to generate a new feature map, and plays a role of giving robustness so that the extracted feature is not affected by parallel movement or the like. The intermediate layer 252 can be composed of one or a plurality of layers that perform these pieces of processing.

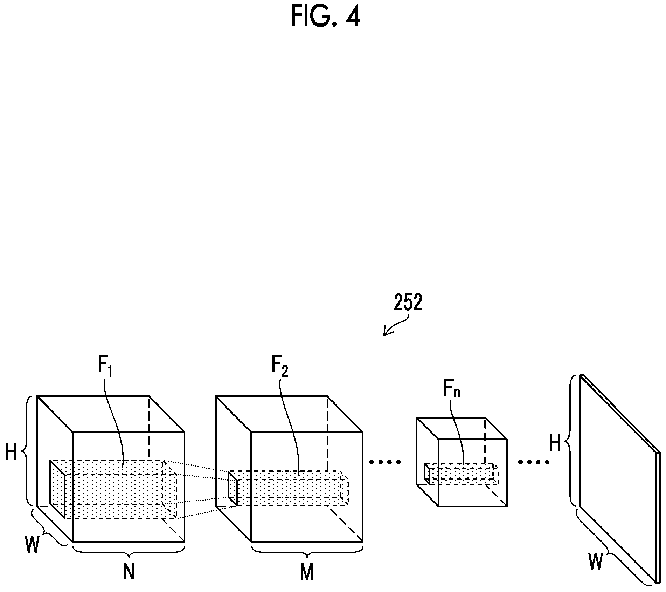

Fig. 4 is a diagram showing a state of the convolution operation in the learning model 224 shown in Figs. 3A and 3B. In a first convolutional layer of the intermediate layer 252, the convolution operation between an image set (learning image set during learning, recognition image set during recognition, such as detection) composed of a plurality of images and a filter $F_1$ is performed. The image set can be composed of N pieces (N channels) of images having an image size of H in a vertical direction and W in a horizontal direction. In a case in which a visible light image is input, the images constituting the image set are images of three channels of red (R), green (G), and blue (B). Since the image sets are N channels (N pieces), the filter $F_1$ used in the convolution operation along with the image set is a filter having a size of $5 \times 5 \times N$ in a case of a filter having a size 5 ($5 \times 5$). By the convolution operation using the filter $F_1$, one channel (one piece) of the "feature map" is generated for one filter $F_1$. A filter $F_2$ used in a second convolutional layer has a filter size of $3 \times 3 \times M$ in a case of a filter having a size 3 ($3 \times 3$).

As in the first convolutional layer, in the second to n-th convolutional layers, the convolution operation is performed by using filters $F_2$ to $F_n$. The reason why size of the "feature map" in the n-th convolutional layer is smaller than the size of the "feature map" in the second convolutional layer is that the feature map is downscaled by the convolutional layer or the pooling layer up to the preceding stage.

Among the layers in the intermediate layer 252, low-order feature extraction (such as edge extraction) is performed in the convolutional layer close to the input side, and higher-order feature extraction (such as extraction of features related to the shape, the structure, and the like of the target) is performed in the convolutional layer closer to the output side. It should be noted that, in a case in which the segmentation is performed for the purpose of measuring a region of interest (in the present embodiment, the scratch and/or the defect), the upscaling is performed in the convolutional layer of the latter half portion, and the "feature map" having the same size as the input image set is obtained in the last convolutional layer. On the other hand, in a case in which the detection of the region of interest is performed, the positional information need only be output, and thus the upscaling is not essential.

It should be noted that the intermediate layer 252 may include a layer that performs batch normalization in addition to the convolutional layer 256 and the pooling layer 258. The batch normalization processing is processing of normalizing a distribution of data in units of mini-batch during learning, and plays a role of advancing learning quickly, reducing dependence on initial values, suppressing overtraining, and the like.

[Processing in output layer]

The output layer 254 is a layer that performs position detection of the region of interest shown in the input image (patch image or the like) based on the feature value output from the intermediate layer 252 and outputs the result. In a case in which the segmentation (class classification) is performed, the output layer 254 understands the position of the region of interest in the image in a pixel level by the "feature map" obtained from the intermediate layer 252. That is, it is possible to detect whether or not each pixel of the image belongs to the region of interest (whether or not each pixel belongs to a specific class) and output the detection result. On the other hand, in a case in which object detection is performed, the determination in the pixel level is not necessary, and the output layer 254 outputs the position information of the object. It should be noted that the "specific class" is, for example, the "defect" or the "scratch". The output layer 254 may finely classify and output the defects and the scratches (air bubbles, foreign matter contamination, holes, fissuring, peeling, and the like).

It should be noted that the output layer 254 (learning model 224) can output the detection result (a result of the segmentation, a result of the class classification) for the unit region. The output layer 254 can output a certainty (probability, reliability degree) of the detection result. The "unit region" may be composed of one pixel or a plurality of pixels.

The output layer 254 may execute discrimination (classification) of the region of interest to output the discrimination result. For example, the output layer 254 may classify the image into three categories of "normal", "scratch", and "defect", and may output three scores corresponding to the "normal", the "scratch", and the "defect" as the discrimination result (the total of the three scores is 100% or 1) or may output the classification result in a case in which the classification can be clearly made from the three scores. It should be noted that the classification may be two classes or may be multiple classes.

In a case of outputting the discrimination result, the intermediate layer 252 or the output layer 254 may or may not include the fully connected layer as the last one or a plurality of layers (see Fig. 3B).

The output layer 254 may output a measurement result of the region of interest. In a case of performing the measurement, a measurement value of the region of interest as the target can be directly output from the learning model 224. The target region of interest can be segmented, for example, as described above, and then can be measured by the processor 102 or the like based on the result. In a case in which the measurement value is directly output, the measurement value itself is learned with respect to the image, so that the measurement value is a regression problem.

In a case in which the learning model 224 having the above-described configuration is used, it is preferable to, in the process of the learning, perform processing (error back propagation) of comparing a result output by the output layer 254 with a correct answer of the recognition for the image set to calculate a loss function (error function), and updating the weight parameter in the intermediate layer 252 from the output-side layer toward the input-side layer so that the loss function is reduced (is minimized). The derivation of the loss function and the update of the learning model based on the loss function in the present embodiment will be described in detail below.

[Recognition by method other than neural network]

The learning model 224 may perform the detection by a method other than the neural network. For example, the region of interest can be detected based on the feature value of the acquired image. In this case, the learning model 224 divides the detection target image into, for example, a plurality of rectangular regions, sets each divided rectangular region as a local region, calculates the feature value (for example, a hue) of the pixel in the local region for each local region of the detection target image, and decides the local region having a specific hue from among the local regions, as the region of interest. Similarly, the learning model 224 may perform the classification or the measurement based on the feature value.

[Implementation of functions of processing unit and processor]

The functions of the respective units (including the detector 106) of the processing unit 100 and the processor 102 described above can be implemented by using various processors and recording media. The various processors include, for example, a central processing unit (CPU) which is a general-purpose processor which executes software (program) to implement various functions. The various processors also include a graphics processing unit (GPU) which is a processor specialized for image processing, and a programmable logic device (PLD) which is a processor of which a circuit configuration can be changed after manufacturing, such as a field programmable gate array (FPGA). In a case in which the learning or the recognition of the image is performed, the configuration using the GPU is effective. The various processors further include a dedicated electric circuit which is a processor having a circuit configuration designed exclusively for executing specific processing, such as an application specific integrated circuit (ASIC).

The functions of the units may be implemented by one processor, or may be implemented by a plurality of processors of the same type or different types (for example, a plurality of FPGAs, or a combination of the CPU and the FPGA, or a combination of the CPU and the GPU). In addition, a plurality of the functions may be implemented by one processor. As an example of configuring the plurality of functions with one processor, first, as represented by a computer, there is a form in which one processor is configured by a combination of one or more CPUs and software, and the processor implements the plurality of functions. Second, as represented by a system on chip (SoC) or the like, there is a form in which a processor that implements the functions of the entire system with one integrated circuit (IC) chip is used. As described above, various functions are configured by one or more of the various processors as the hardware structure. Further, the hardware structure of these various processors is more specifically an electric circuit (circuitry) in which circuit elements, such as semiconductor elements, are combined. The electric circuit may be an electric circuit that implements the functions using a logical sum, a logical product, a logical negation, an exclusive logical sum, and a logical operation of a combination thereof.

In a case in which the processor or the electric circuit executes software (program), a code readable by a computer (for example, various processors or electric circuits constituting the processing unit 100 and/or a combination thereof) of the executed software is stored in a non-transitory recording medium, such as the ROM 130, and the computer refers to the software. The software stored in the non-transitory recording medium includes a program (learning program) for executing the learning method according to the embodiment of the present invention and data (first and second DNA profile data items, learning data, such as cancer type labels which will be described below, weight parameters used in machine learning, and the like) used in the execution. The code may be recorded in the non-transitory recording medium, such as various magneto-optical recording devices and a semiconductor memory, instead of the ROM 130. In a case of the processing using the software, for example, the RAM 150 is used as a transitory storage region, and the data stored in, for example, the non-transitory recording medium, such as an electronically erasable and programmable read only memory (EEPROM) or a flash memory (not shown), can also be referred to. The storage unit 200 may be used as the "non-transitory recording medium". It should be noted that the "non-transitory recording medium" does not include a non-tangible recording medium, such as a carrier signal or a propagation signal itself.

Details of the processing using the processing unit 100 having the above-described configuration will be described below.

[Configuration of storage unit]

The storage unit 200 is configured by various storage devices, such as a hard disk and a semiconductor memory, and a control unit thereof, and can store the image of the subject (input image, patch image), the learning data, the weight parameter used in the learning model, an execution condition of the learning method and a result thereof, an execution condition of the image processing method and a result thereof, and the like.

[Configuration of display unit]

The display unit 300 comprises, for example, the monitor 310 (display device) configured by a display such as a liquid crystal display, and can display the image of the subject, the execution results of the learning method, the learning program, the image processing method, and the like. The monitor 310 may be configured by a touch panel type display, and may receive an instruction input by a user.

[Configuration of operation unit]

The operation unit 400 comprises a keyboard 410 and a mouse 420 as an example of an operation device, and the user can perform operations related to the execution of the learning method, the learning program, and the image processing method according to the embodiment of the present invention, the result display, and the like via the operation unit 400. The operation unit 400 may comprise another operation device.

[Processing of learning method]

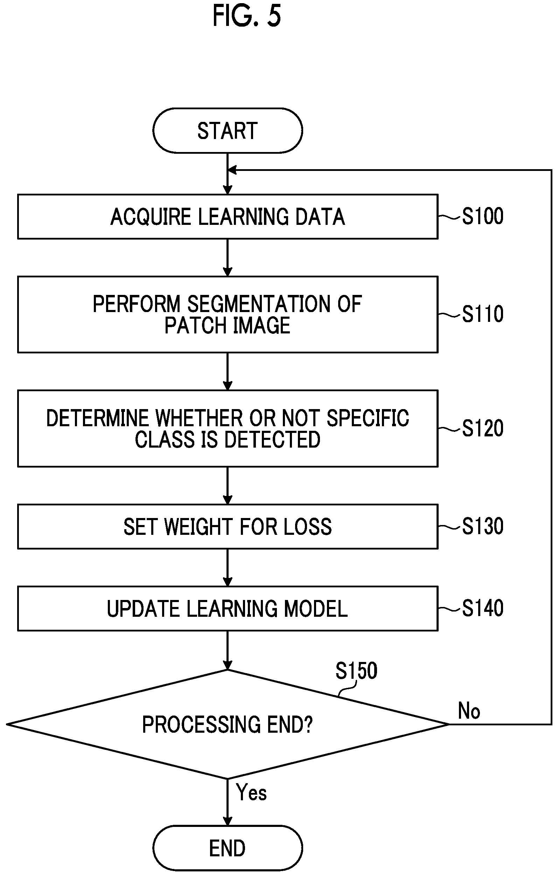

Processing of the learning method (learning program) according to the present embodiment will be described. Fig. 5 is a flowchart showing an overview of the processing of the learning method. It should be noted that the following description is an example of the processing according to the embodiment of the present invention, and the order of the processing may be changed as necessary.

[Outline of processing]

(Acquisition of learning data)

In a case in which the processing is started, the data acquisition unit 104 (processor) acquires the learning data consisting of a pair of the patch image and the correct answer data of the class label for the unit region of the patch image (step S100: data acquisition step, data acquisition processing). The data acquisition unit 104 may acquire the learning data from the storage unit 200, or may acquire the learning data from the external database 510. The data acquisition unit 104 may acquire the learning data in a batch or may acquire the learning data in a plurality of times.

(Segmentation of patch image)

The detector 106 (processor) performs the segmentation of the acquired patch image by using the learning model 224 and the learning data described above, and outputs the certainty that the unit region belongs to each class (step S110: determination step, determination processing). The setting of the "class" is, for example, the "scratch", the "defect", or the "normal" (other than the "scratch" and the "defect"). Here, the "scratch" can be defined as a discontinuous portion of the subject, and the "defect" can be defined as a scratch in which the inspection result is unacceptable beyond the standard specified in a standard, a specification, or the like (for example, a scratch having a size or a degree beyond the standard). However, in the present invention, the scratch and the defect may be treated as the same "defect" without distinction. In addition, the scratches and the defects may be classified into a plurality of types (for example, foreign matter, air bubbles, holes, fissuring, and peeling) or degrees (number, size, density, and the like), and the scratches and the defects having different types and/or degrees may be treated as different classes. It should be noted that it is preferable to set the layer configuration (presence or absence of the fully connected layer, the number of outputs, and the like) of the detector 106 (learning model 224) in advance depending on the class to be classified, and to prepare the correct answer data in accordance with the type, the number, the degree, and the like of the class to be classified.

It should be noted that the "unit region" according to the embodiment of the present invention is a region composed of one pixel or a plurality of pixels.

Hereinafter, a case in which the pixels are classified into two classes of the "defect" and the "normal", that is, a case in which the scratch and the defect are not distinguished from each other and the unit region is composed of one pixel will be described. It is assumed that the detector 106 outputs the certainty q ($q \in [0, 1]$) that each pixel belongs to the defect class.

(Determination of whether or not specific class is detected)

The determination unit 108 (processor) determines whether or not the second unit region belonging to the specific class (defect class) is correctly detected by the learning model 224, based on the certainty q and the correct answer data p for each pixel, for each patch image (for each second unit region) (step S120: determination step, determination processing).

(Weighting and update)

The weighting unit 110 (processor) sets the weight for the loss (loss function) in a unit of the patch image based on a result of the determination described above (step S130: weighting step, weighting processing), and the update unit 112 (processor) updates the learning model of the detector 106 based on a result of the weighting (step S140: update step, update processing). The update unit 112 (processor) repeats the pieces of processing of steps S100 to S140 on each unit of the processor 102 until an end condition is satisfied (until YES in step S150). The end condition is, for example, that the learning of all the learning data has ended, a predetermined number of repetitions has ended, the losses have converged, and the like.

[Details of processing]

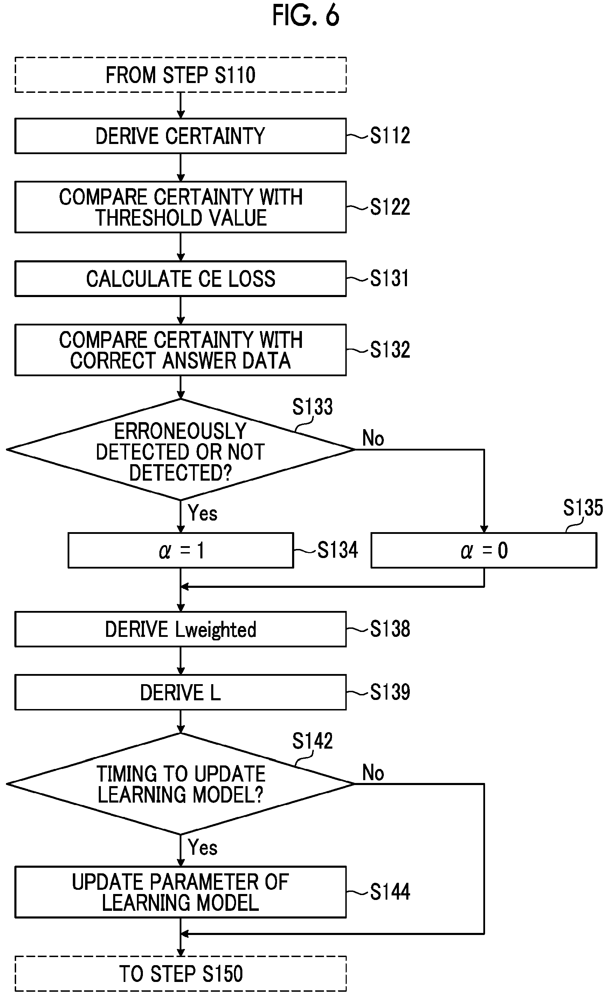

Details of the processing of the learning method described above will be described with reference to the flowchart of Fig. 6.

[Determination of class]

The determination unit 108 (processor) compares the certainty q (certainty that each pixel belongs to the defect class) output by the detector 106 (learning model) with the threshold value $\theta$ (step S122: determination step, determination processing). In a case in which the certainty is equal to or higher than the threshold value ($q \geq \theta$), the determination unit 108 can determine that "the pixel that is the determination target belongs to the defect class (specific class)".

[Weighting for loss and derivation of loss function]

The weighting unit 110 (processor) performs the weighting in a unit of the patch image as follows, by using the CE loss, which is the loss for each patch image, as the first loss.

The weighting unit 110 calculates the CE loss by Expression (1) based on the certainty q of each pixel and the correct answer data p (step S131: weighting step, weighting processing). The weighting unit 110 compares the certainty q with the correct answer data p (step S132: weighting step, weighting processing), sets $\alpha = 1$ in a unit of the patch image as a first weight for the CE loss (step S134) in a case of being erroneously detected or not detected (YES in step S133; see Expression (4)), that is, in a case in which the comparison result is the specific result, and sets $\alpha = 0$ in a unit of the patch image as the first weight in a case other than a case of being erroneously detected or not detected (NO in step S133; see Expression (4)), that is, in a case in which the comparison result is not the specific result. As described above, the weighting unit 110 sets, as the first weight, a larger weight in a case in which the comparison result is the specific result than in a case in which the comparison result is not the specific result.

The weighting unit 110 (processor) derives a first loss function (see Expression (3); loss function) by averaging the result of the weighting over the entire batch composed of the patch images (step S138: loss function derivation step, loss function derivation processing).

The weighting and the derivation of the loss function described above can be represented by Expressions (3) and (4). It should be noted that, in Expression (3), B is the number of patch images constituting the batch, and N is the total number of pixels of the batch (= B × H × W, in which H and W are the sizes of the input patch image).

$$L_{\text{weighted}} = \frac{1}{N} \sum_{i=1}^{B} \left( \alpha(\mathrm{I}_i) \sum_{(x,y) \in \mathrm{I}_i} CE(p,q) \right) \qquad \cdots \ (\,3\,)$$

$$\alpha(\mathrm{I}_i) = \begin{cases} 1, if\,(\forall p, p = 0 \ and \ \exists q, q \geq \theta) \ or\,(\exists p, p = 1 \ and \ \forall q, q < \theta) \\ 0, otherwise \end{cases} \cdots \ (\,4\,)$$

$\theta \in (0, 1)$ in Expression (4) represents a predetermined threshold value of the defect probability, and the processor 102 can determine that the pixel has the defect in a case in which the certainty q is equal to or higher than the threshold value $\theta$. In this case, in a case in which a region that does not have the defect is erroneously detected (first case) or in a case in which the defect is not detected despite the fact that the defect exists (second case), $\alpha(\mathrm{Ii}) = 1$ in Expression (3), and thus the loss is added to the patch. On the contrary, in a case in which the learning progresses and the pixel for which even a part of the defect is successfully detected is generated, $\alpha(\mathrm{Ii}) = 0$ (third case), and thus the priority of learning is relatively decreased.

In a case in which the weighting in Expression (4) is described in detail, "erroneously detected (as a patch)" is defined as "a case in which the correct answer label p = 0 in all the pixels in the patch and the output value (certainty) q of the learning model is equal to or higher than the threshold value $\theta$ (q $\geq \theta$) in any one pixel in the patch", and "not detected (as a patch)" is defined as "a case in which there is one or more pixels with the correct answer label p = 1 in the patch and the output value (certainty) q of the learning model is lower than the threshold value $\theta$ (q < $\theta$) in all the pixels in the patch". In a case of "erroneously detected (as a patch)" or "not detected (as a patch)", $\alpha = 1$, and in other cases, $\alpha = 0$. It should be noted that, in Expression (4), the "not detected" or "erroneously detected" is not determined for each pixel in the patch, and one determination result is determined for the entire patch (second unit region) based on the standard described above.

[Influence of weighting on learning]

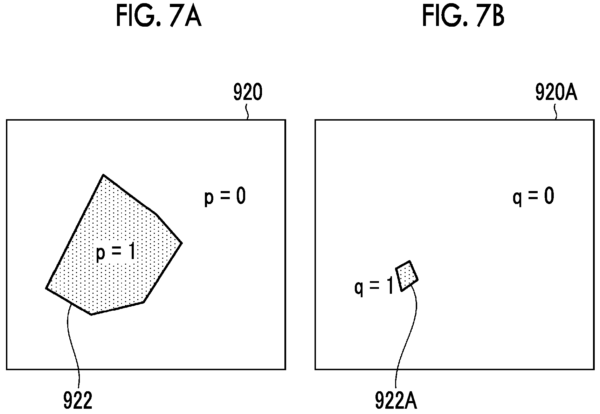

The influence of the weighting described above on the learning will be described. For example, as shown in Fig. 7A (a diagram showing a correct answer range of the defect in the patch image), a case in which a large defect 922 exists in the patch image 920 (p = 1 in a pixel on an inner side of the defect 922 and p = 0 in a pixel on an outer side of the defect 922) is considered. In addition, in this case, as shown in Fig. 7B, it is assumed that the detection result by the detector 106 is that a region narrower than the correct answer is detected as a defect 922A in the patch image 920A (p = 1 in a pixel on an inner side of the defect 922A and p = 0 in a pixel on an outer side of the defect 922A).

In this case, according to the above-described weighting, $\alpha = 0$ (determination that the detection is correctly performed). This can be interpreted as "a penalty for non-detection (weighting with $\alpha = 1$) is eliminated as long as at least a part of the large defect is detected" and, conversely, it is "not necessary to detect the 'entire' region of the large defect".

In a case of the examples shown in Figs. 7A and 7B, with the related-art method, since an area that cannot be detected is large in a case of being captured at the pixel level, the large defect 922 is further attempted to be learned (weighted) in accordance with the area that cannot be detected. On the other hand, with the method according to the embodiment of the present invention, the learning of such a large defect 922 ends (weight is set to zero) at an early stage. On the other hand, in a case of a small defect, the defect is composed of, for example, about several pixels, and thus the standard that "a part of the defect need only be detected" is not to be relaxed.

As a result, with the method according to the embodiment of the present invention, the standard of "detected" only for the large defect is relaxed, and the small defect is relatively easily learned.

From the above, according to the present embodiment, even in a case of the small defect, and not detected region is likely to be learned in a focused manner, which is advantageous from the viewpoint of improving the detection rate.

[Combination of loss functions]

In the update of the learning model, the weighting unit 110 (processor) may use the above-described first loss function (Lweighted) alone as the loss function, or may use a function in which the Lweighted and a second loss function, which is a loss function for the batch and is different from the Lweighted, are combined, as the loss function. For example, as in Expression (5), the normal CE loss may be used as the second loss function ($L_{CE}$), and a function obtained by adding the first loss function and the second loss function with any coefficient ($\lambda > 0$) may be used as the loss function (step S139: loss function derivation step, loss function derivation processing).

$$L = L_{CE} + \lambda \, L_{\text{weighted}} \qquad \cdots \ (\,5\,)$$

It should be noted that further variations of the loss function will be described in a section of "Variation of loss function" below.

The processor 102 may decide what kind of loss function to use or what kind of weight to use in accordance with the operation of the user via the operation unit 400 or automatically regardless of the operation of the user.

[Update of learning model]

In a case in which it is the timing to update the learning model 224 (YES in step S142), the update unit 112 (processor) updates the parameter of the learning model 224 by using the derived loss function (step S144: update step, update processing). For example, the update unit 112 updates the parameter of the learning model to minimize the loss function. It should be noted that the timing of the update in step S142 may be for each patch image, for each step (for each batch), or for a plurality of steps.

[Examples]

In a data set in which the small defect of 4 px or less and the large defect of 10000 px or more coexist, segmentation learning was performed under the following condition, and the detection probabilities of the foreign material less dense (FMLD) and the foreign material more dense (FMMD) were 74.5% and 74.1%, respectively, in the condition (related-art method) in which the CE loss was used as the loss function, but in the condition (method according to the embodiment of the present invention) in which the weighted CE loss according to the embodiment described above was used, the detection probabilities of the FMLD and the FMMD were improved to 89.7% and 88.1%, respectively, in the learning result after a total of 200 Epochs. Here, the "detection probability" is the number of successfully detected defects with respect to the total number of existing defects in a case in which the continuous region to which the correct answer label is attached is counted as "one".

<Detailed conditions>

(a) The weighting described above was applied to derive the loss function for each Epoch.
(b) As the weighting condition, Expression (4) was applied, and the weight parameter (coefficient) $\lambda = 0.1$ of Expression (5) was set.
(c) The threshold value for the determination was fixed at $\theta = 0.5$.

[Effects of first embodiment]

As described above, with the learning method, the learning apparatus, and the learning program according to the first embodiment, it is possible to obtain the learning model having a good detection rate.

[Variation of processing in learning method]

[Variation of image]

In the present invention, a radiation image, a visible light image, a near-infrared light image, or the like can be used for learning (or image processing after learning is completed), and a frequency band for acquiring the image is not particularly limited.

[Acquisition of patch image by image division]

The patch image acquired in step S 100 may not be an image having a size suitable for the size of the image to be input to the detector 106 (learning model 224). Specifically, there is a case in which an image (for example, about several thousand pixels $\times$ several thousand pixels) obtained by imaging the subject has a larger size than the patch image (for example, about several tens of pixels $\times$ several tens of pixels to about several hundred pixels $\times$ several hundred pixels). In such a case, the data acquisition unit 104 (processor) can acquire the image obtained by dividing the input image in accordance with the size of the image input to the detector 106 as the patch image (data acquisition step, data acquisition processing). As a result, a load on a processor, such as a CPU or a GPU, or a memory, such as a RAM, can be reduced.

In a case of acquiring the patch image, the data acquisition unit 104 may perform resizing of the image instead of or in addition to the division (cutting into the patch image) of the input image (data acquisition step, data acquisition processing). For example, the data acquisition unit 104 can input the entire rectangular image as a square.

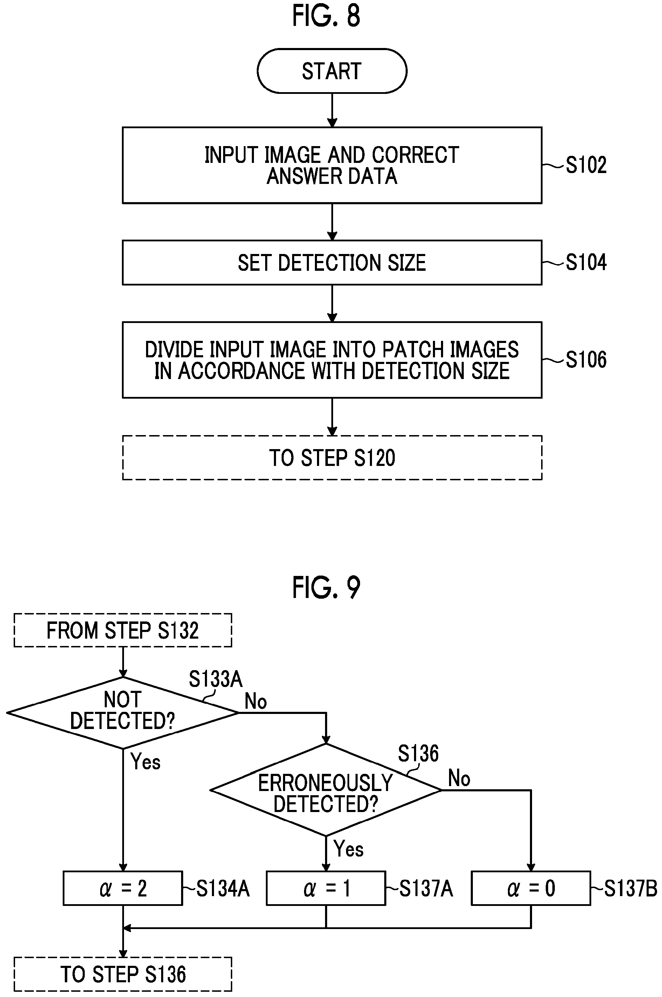

Further, the data acquisition unit 104 (processor) may acquire a patch image having a size corresponding to a size (detection size) of the target to be detected. For example, as shown in the flowchart of Fig. 8, the data acquisition unit 104 inputs the image and the correct answer data (step S102), and sets the size of the target to be detected (for example, the scratch and/or the defect of the subject) (step S104). The data acquisition unit 104 can automatically set the target size in accordance with the operation of the user via the operation unit 400 or a predetermined condition (without the operation of the user).

The data acquisition unit 104 divides the input image into the patch images in accordance with the set sizes (step S106). The resizing may be performed as described above. The subsequent processing is the same as the processing described above with respect to the flowcharts of Figs. 5 and 6.

[Threshold value for determination]

The processor 102 (processor) may change the threshold value $\theta$ in the process of the learning. For example, based on the idea that "the threshold value (detection hurdle, standard) is set low in the initial stage of learning because the scratch or the defect cannot be detected with high accuracy, and the threshold value is set high as the learning progresses and the scratch or the defect can be detected with high accuracy", the threshold value can be set low in the initial stage of learning and then can be set high.

[Variation of weighting]

In the first embodiment described above, as the weight for the patch image, $\alpha = 1$ is set in a case of being erroneously detected or not detected (first case or second case), and $\alpha = 0$ is set in other cases (third case). However, in the present invention, the weighting of the patch image is not limited to such an aspect. In addition to the above-described aspect, for example, the detection rate of the small defect may be improved by setting the weight in a case of being not detected (second case) to be larger than the weight in a case of being erroneously detected (first case). Fig. 9 is a flowchart showing the weighting processing in such a case. As shown in Fig. 9, the weighting unit 110 (processor) can set $\alpha = 2$ as the weight in a case of being not detected (YES in step S133A) (step S134A), set $\alpha = 1$ in a case of being erroneously detected (YES in step S136) (step S137A), and set $\alpha = 0$ in other cases (NO in step S136).

[Variation of loss function]

In the first aspect described above, a case of using $L_{CE}$ based on the CE loss, $L_{weighted}$, or a combination thereof as the loss function has been described, but a loss function different from these can also be used in the present invention. For example, the weighting unit 110 (processor) can use a mean squared error, a Dice loss, an IoU loss (Jaccard loss), a Tversky loss, a Focal loss, a combination of these, or a combination of these and $L_{CE}$ and/or $L_{weighted}$, as the loss function. In a case in which a plurality of loss functions are combined, as in Expression (6), a total loss function $L_{total}$ (loss function) can be obtained by combining individual loss functions in any number and any coefficient (loss function derivation step, loss function derivation processing). It should be noted that the coefficient of $L_{weighted}$ is preferably greater than 0.

$$ L_{total} = \sum_{i=1}^{K} \lambda_i L_i \qquad \cdot\cdot\cdot \; (6) $$

It should be noted that, in Expression (6), K is an integer of 1 or more, which is the number of the combined loss functions, $\lambda i$ is a coefficient for each loss function (any real number), and $L_i$ is each loss function, which is any one of $L_{CE}$, $L_{weighted}$, the mean squared error, the Dice loss, the IoU loss (Jaccard loss), the Tversky loss, or the Focal loss.

[Operation as image processing apparatus]

After the learning described above is completed, the learning model 224 of the detector 106 is the trained model. That is, the learning apparatus 10 after learning is completed can operate as the image processing apparatus. With this image processing apparatus, it is possible to detect the scratch and/or the defect of the subject with a good detection rate by using the trained model that has been trained by the learning method according to the embodiment of the present invention.

Explanation of References

10: learning apparatus
100: processing unit
102: processor
104: data acquisition unit
106: detector
108: determination unit
110: weighting unit
112: update unit
114: display control unit
116: recording control unit
118: communication control unit
130: ROM
150: RAM
200: storage unit
224: learning model
250: input layer
252: intermediate layer
254: output layer
256: convolutional layer
258: pooling layer
260: fully connected layer
300: display unit
310: monitor
400: operation unit
410: keyboard
420: mouse
500: external server
510: external database
900: large defect
902: region
910: small defect
912: region
F1: filter
F2: filter
NW: network
S100 to S150: each step of learning method

**Claims**

1. A learning method for a detection task in which detection targets of different sizes are mixed, executed by a learning apparatus including a processor, the learning method comprising:

   causing the processor to execute:

   a data acquisition step of acquiring learning data consisting of a pair of a patch image and correct answer data of a class label for a unit region of the patch image;
   a determination step of performing segmentation of the patch image by using a learning model and the learning data, and determining, for each patch image, whether or not a second unit region is correctly detected by the learning model;
   a weighting step of setting a first weight based on a result of the determination; and
   an update step of updating the learning model based on a result of the weighting,

   wherein, in the weighting step, the processor sets the first weight, in a unit of the patch image, for a first loss that is a loss for each patch image,
   wherein, in the determination step, the learning model detects the second unit region belonging to a specific class,
   wherein, in the determination step, the processor determines that the second unit region is not correctly detected in a first case in which the second unit region belonging to the specific class is erroneously detected by the learning model and in a second case in which the second unit region belonging to the specific class is not detectable by the learning model, and

wherein, in the weighting step, the processor sets a larger weight in the second case than in the first case.

2. The learning method according to claim 1,
wherein, in the weighting step, the processor sets, as the first weight, a larger weight in a case in which it is determined that the second unit region is not correctly detected than in a case in which it is determined that the second unit region is correctly detected.

3. The learning method according to claim 1,
wherein, in the determination step, the processor determines that a result of the detection is correct in a third case in which the result of the detection is neither the first case nor the second case.

4. The learning method according to claim 1 or 3,

wherein the learning model outputs a certainty of the detection, and
in the determination step, the processor determines whether or not the second unit region belongs to the specific class based on whether or not the certainty is equal to or higher than a threshold value, and
preferably, the processor changes the threshold value in a process of learning.

5. The learning method according to any one of claims 1 to 4,
wherein, in the weighting step, the processor performs the weighting on a cross-entropy loss of the patch image.

6. The learning method according to any one of claims 1 to 5,
wherein the processor

further executes a loss function derivation step of deriving a loss function for a batch composed of the patch images, and
updates the learning model by using the loss function in the update step.

7. The learning method according to claim 6,

wherein, in the loss function derivation step, the processor derives, as the loss function, a first loss function obtained by averaging the result of the weighting over an entire batch composed of the patch images, and
preferably, in the loss function derivation step, the processor uses, as the loss function, a function in which the first loss function and a second loss function, which is a loss function for the batch and is different from the first loss function, are combined.

8. The learning method according to any one of claims 1 to 7,
wherein, in the update step, the processor updates a parameter of the learning model to minimize the loss function.

9. The learning method according to any one of claims 1 to 8,

wherein, in the data acquisition step, the processor inputs an image to acquire a divided image of the input image as the patch image,
and/or,
wherein, in the data acquisition step, the processor acquires the patch image of a size corresponding to a size of a scratch and/or a defect of a subject to be detected.

10. A learning apparatus for a detection task in which detection targets of different sizes are mixed comprising:

a processor,
wherein the processor executes:

data acquisition processing of acquiring learning data consisting of a pair of a patch image and correct answer data of a class label for a unit region of the patch image;
determination processing of performing segmentation of the patch image by using a learning model and the learning data, and determining, for each patch image, whether or not a second unit region is correctly detected by the learning model;

a weighting processing of setting a first weight based on a result of the determination; and

update processing of updating the learning model based on a result of the weighting,

wherein, in the weighting processing, the processor sets the first weight, in a unit of the patch image, for a first loss that is a loss for each patch image,

wherein, in the determination processing, the learning model detects the second unit region belonging to a specific class,

wherein, in the determination processing, the processor determines that the second unit region is not correctly detected in a first case in which the second unit region belonging to the specific class is erroneously detected by the learning model and in a second case in which the second unit region belonging to the specific class is not detectable by the learning model, and

wherein, in the weighting processing, the processor sets a larger weight in the second case than in the first case.

11. A non-transitory computer-readable recording medium on which a program for causing a computer to execute the learning method according to any one of claims 1 to 9 is recorded.

12. An image processing apparatus comprising:

a trained model that has been trained by the learning method according to any one of claims 1 to 9,

wherein the trained model is used to detect a scratch and/or a defect of a subject from an input image.

**Patentansprüche**

1. Lernverfahren für eine Detektionsaufgabe, bei der Detektionsziele unterschiedlicher Größen gemischt sind, das von einer Lernvorrichtung, die einen Prozessor enthält, ausgeführt wird, wobei das Lernverfahren umfasst:
Veranlassen, dass der Prozessor ausführt:

einen Datenerfassungsschritt des Erfassens von Lerndaten, die aus einem Paar eines Patch-Bildes und Korrektantwortdaten eines Klassenlabels für einen Einheitsbereich des Patch-Bildes bestehen;

einen Bestimmungsschritt des Durchführens von Segmentierung des Patch-Bildes durch Verwenden eines Lernmodells und der Lerndaten und des Bestimmens, für jedes Patch-Bild, ob ein zweiter Einheitsbereich korrekt durch das Lernmodell detektiert wird oder nicht;

einen Gewichtungsschritt des Einstellens eines ersten Gewichts auf der Grundlage eines Ergebnisses der Bestimmung; und

einen Aktualisierungsschritt des Aktualisierens des Lernmodells auf der Grundlage eines Ergebnisses der Gewichtung,

wobei der Prozessor in dem Gewichtungsschritt das erste Gewicht in einer Einheit des Patch-Bildes für einen ersten Verlust, der ein Verlust für jedes Patch-Bild ist, einstellt,

wobei das Lernmodell in dem Bestimmungsschritt den zweiten Einheitsbereich detektiert, der zu einer spezifischen Klasse gehört,

wobei der Prozessor in dem Bestimmungsschritt bestimmt, dass der zweite Einheitsbereich in einem ersten Fall, in dem der zweite Einheitsbereich, der zu der spezifischen Klasse gehört, durch das Lernmodell fehlerhaft detektiert wird, und in einem zweiten Fall, in dem der zweite Einheitsbereich, der zu der spezifischen Klasse gehört, durch das Lernmodell nicht detektierbar ist, nicht korrekt detektiert wird, und

wobei der Prozessor in dem Gewichtungsschritt ein höheres Gewicht in dem zweiten Fall als in dem ersten Fall einstellt.

2. Lernverfahren nach Anspruch 1,
wobei der Prozessor in dem Gewichtungsschritt als das erste Gewicht ein höheres Gewicht in einem Fall, in dem bestimmt wird, dass der zweite Einheitsbereich nicht korrekt detektiert wird, als in einem Fall, in dem bestimmt wird, dass der zweite Einheitsbereich korrekt detektiert wird, einstellt.

3. Lernverfahren nach Anspruch 1,
wobei der Prozessor in dem Bestimmungsschritt bestimmt, dass ein Ergebnis der Detektion in einem dritten Fall, in dem das Ergebnis der Detektion weder der erste Fall noch der zweite Fall ist, korrekt ist.

**4.** Lernverfahren nach Anspruch 1 oder 3,

wobei das Lernmodell eine Sicherheit der Detektion ausgibt, und
der Prozessor in dem Bestimmungsschritt auf der Grundlage davon, ob die Sicherheit gleich oder höher als ein Schwellenwert ist oder nicht, bestimmt, ob der zweite Einheitsbereich zu der spezifischen Klasse gehört oder nicht, und
der Prozessor vorzugsweise den Schwellenwert in einem Lernprozess ändert.

**5.** Lernverfahren nach einem der Ansprüche 1 bis 4,
wobei der Prozessor in dem Gewichtungsschritt die Gewichtung an einem Kreuzentropieverlust des Patch-Bildes durchführt.

**6.** Lernverfahren nach einem der Ansprüche 1 bis 5,

wobei der Prozessor
ferner einen Verlustfunktionsableitungsschritt des Ableitens einer Verlustfunktion für einen Batch, der aus den Patch-Bildern aufgebaut ist, ausführt, und
das Lernmodell durch Verwenden der Verlustfunktion in dem Aktualisierungsschritt aktualisiert.

**7.** Lernverfahren nach Anspruch 6,

wobei der Prozessor in dem Verlustfunktionsableitungsschritt als die Verlustfunktion eine erste Verlustfunktion, die durch Mitteln des Ergebnisses der Gewichtung über einen gesamten Batch, der aus den Patch-Bildern aufgebaut ist, erhalten wird, ableitet, und
der Prozessor vorzugsweise in dem Verlustfunktionsableitungsschritt als die Verlustfunktion eine Funktion, bei der die erste Verlustfunktion und eine zweite Verlustfunktion, die eine Verlustfunktion für den Batch ist und sich von der ersten Verlustfunktion unterscheidet, kombiniert sind, verwendet.

**8.** Lernverfahren nach einem der Ansprüche 1 bis 7,
wobei der Prozessor in dem Aktualisierungsschritt einen Parameter des Lernmodells aktualisiert, um die Verlustfunktion zu minimieren.

**9.** Lernverfahren nach einem der Ansprüche 1 bis 8,

wobei der Prozessor in dem Datenerfassungsschritt ein Bild eingibt, um ein unterteiltes Bild des Eingabebildes als das Patch-Bild zu erfassen,
und/oder,
wobei der Prozessor in dem Datenerfassungsschritt das Patch-Bild einer Größe, die einer Größe eines Kratzers und/oder eines Defekts eines zu detektierenden Untersuchungsobjekts entspricht, erfasst.

**10.** Lernvorrichtung für eine Detektionsaufgabe, bei der Detektionsziele unterschiedlicher Größen gemischt sind, umfassend:

einen Prozessor,
wobei der Prozessor ausführt:

Datenerfassungsverarbeitung des Erfassens von Lerndaten, die aus einem Paar eines Patch-Bildes und Korrektantwortdaten eines Klassenlabels für einen Einheitsbereich des Patch-Bildes bestehen;
Bestimmungsverarbeitung des Durchführens von Segmentierung des Patch-Bildes durch Verwenden eines Lernmodells und der Lerndaten und des Bestimmens, für jedes Patch-Bild, ob ein zweiter Einheitsbereich korrekt durch das Lernmodell detektiert wird oder nicht;
eine Gewichtungsverarbeitung des Einstellens eines ersten Gewichts auf der Grundlage eines Ergebnisses der Bestimmung; und
Aktualisierungsverarbeitung des Aktualisierens des Lernmodells auf der Grundlage eines Ergebnisses der Gewichtung,
wobei der Prozessor in der Gewichtungsverarbeitung das erste Gewicht in einer Einheit des Patch-Bildes für einen ersten Verlust, der ein Verlust für jedes Patch-Bild ist, einstellt,
wobei das Lernmodell in der Bestimmungsverarbeitung den zweiten Einheitsbereich detektiert, der zu einer spezifischen Klasse gehört,

wobei der Prozessor in der Bestimmungsverarbeitung bestimmt, dass der zweite Einheitsbereich in einem ersten Fall, in dem der zweite Einheitsbereich, der zu der spezifischen Klasse gehört, durch das Lernmodell fehlerhaft detektiert wird, und in einem zweiten Fall, in dem der zweite Einheitsbereich, der zu der spezifischen Klasse gehört, durch das Lernmodell nicht detektierbar ist, nicht korrekt detektiert wird, und wobei der Prozessor in der Gewichtungsverarbeitung ein höheres Gewicht in dem zweiten Fall als in dem ersten Fall einstellt.

11. Nicht flüchtiges computerlesbares Aufzeichnungsmedium, auf dem ein Programm zum Veranlassen eines Computers, das Lernverfahren nach einem der Ansprüche 1 bis 9 auszuführen, aufgezeichnet ist.

12. Bildverarbeitungsvorrichtung, umfassend:

ein trainiertes Modell, das durch das Lernverfahren nach einem der Ansprüche 1 bis 9 trainiert worden ist, wobei das trainierte Modell verwendet wird, um einen Kratzer und/oder einen Defekt eines Untersuchungsobjekts aus einem Eingabebild zu detektieren.

## Revendications

1. Procédé d'apprentissage pour une tâche de détection dans laquelle des cibles de détection de tailles différentes sont mélangées, exécuté par un appareil d'apprentissage incluant un processeur, le procédé d'apprentissage comprenant :

amener le processeur à exécuter :

une étape d'acquisition de données consistant à acquérir des données d'apprentissage constituées d'une paire d'une image de patch et de données de réponse correcte d'une étiquette de classe pour une région unitaire de l'image de patch ;
une étape de détermination consistant à effectuer une segmentation de l'image de patch en utilisant un modèle d'apprentissage et les données d'apprentissage, et à déterminer,
pour chaque image de patch, si oui ou non une deuxième région unitaire est correctement détectée par le modèle d'apprentissage ;
une étape de pondération consistant à définir un premier poids sur la base d'un résultat de la détermination ; et
une étape de mise à jour consistant à mettre à jour le modèle d'apprentissage sur la base d'un résultat de la pondération,
dans lequel, dans l'étape de pondération, le processeur définit le premier poids, dans une unité de l'image de patch, pour une première perte qui est une perte pour chaque image de patch,
dans lequel, dans l'étape de détermination, le modèle d'apprentissage détecte la deuxième région unitaire appartenant à une classe spécifique,
dans lequel, dans l'étape de détermination, le processeur détermine que la deuxième région unitaire n'est pas correctement détectée dans un premier cas où la deuxième région unitaire appartenant à la classe spécifique est détectée par erreur par le modèle d'apprentissage et dans un deuxième cas où la deuxième région unitaire appartenant à la classe spécifique n'est pas détectable par le modèle d'apprentissage, et
dans lequel, dans l'étape de pondération, le processeur définit un poids plus élevé dans le deuxième cas que dans le premier cas.

2. Procédé d'apprentissage selon la revendication 1,
dans lequel, dans l'étape de pondération, le processeur définit, comme le premier poids, un poids plus élevé dans un cas où il est déterminé que la deuxième région unitaire n'est pas correctement détectée que dans un cas où il est déterminé que la deuxième région unitaire est correctement détectée.

3. Procédé d'apprentissage selon la revendication 1,
dans lequel, dans l'étape de détermination, le processeur détermine qu'un résultat de la détection est correct dans un troisième cas où le résultat de la détection n'est ni le premier cas ni le deuxième cas.

4. Procédé d'apprentissage selon la revendication 1 ou la revendication 3,

dans lequel le modèle d'apprentissage produit une certitude de la détection, et

dans l'étape de détermination, le processeur détermine si oui ou non la deuxième région unitaire appartient à la classe spécifique sur la base du fait que la certitude est égale ou supérieure à une valeur seuil, et de préférence, le processeur modifie la valeur seuil dans un processus d'apprentissage.

5. Procédé d'apprentissage selon l'une quelconque des revendications 1 à 4, dans lequel, dans l'étape de pondération, le processeur effectue la pondération sur une perte d'entropie croisée de l'image de patch.

6. Procédé d'apprentissage selon l'une quelconque des revendications 1 à 5,

dans lequel le processeur
exécute en outre une étape de dérivation de fonction de perte consistant à dériver une fonction de perte pour un lot composé des images de patch, et
met à jour le modèle d'apprentissage en utilisant la fonction de perte dans l'étape de mise à jour.

7. Procédé d'apprentissage selon la revendication 6,

dans lequel, dans l'étape de dérivation de fonction de perte, le processeur dérive, en tant que fonction de perte, une première fonction de perte obtenue en moyennant le résultat de la pondération sur l'ensemble d'un lot composé des images de patch, et
de préférence, dans l'étape de dérivation de fonction de perte, le processeur utilise, en tant que fonction de perte, une fonction dans laquelle la première fonction de perte et une deuxième fonction de perte, qui est une fonction de perte pour le lot et est différente de la première fonction de perte, sont combinées.

8. Procédé d'apprentissage selon l'une quelconque des revendications 1 à 7, dans lequel, dans l'étape de mise à jour, le processeur met à jour un paramètre du modèle d'apprentissage pour minimiser la fonction de perte.

9. Procédé d'apprentissage selon l'une quelconque des revendications 1 à 8,

dans lequel, dans l'étape d'acquisition de données, le processeur entre une image pour acquérir une image divisée de l'image d'entrée en tant qu'image de patch,
et/ou,
dans lequel, dans l'étape d'acquisition de données, le processeur acquiert l'image de patch d'une taille correspondant à une taille d'une rayure et/ou d'un défaut d'un sujet à détecter.

10. Appareil d'apprentissage pour une tâche de détection dans laquelle des cibles de détection de tailles différentes sont mélangées, comprenant :

un processeur,
dans lequel le processeur exécute :

un traitement d'acquisition de données consistant à acquérir des données d'apprentissage constituées d'une paire d'une image de patch et de données de réponse correcte d'une étiquette de classe pour une région unitaire de l'image de patch ;
un traitement de détermination consistant à effectuer une segmentation de l'image de patch en utilisant un modèle d'apprentissage et les données d'apprentissage, et à déterminer, pour chaque image de patch, si oui ou non une deuxième région unitaire est correctement détectée par le modèle d'apprentissage ;
un traitement de pondération consistant à définir un premier poids sur la base d'un résultat de la détermination ; et
un traitement de mise à jour consistant à mettre à jour le modèle d'apprentissage sur la base d'un résultat de la pondération,
dans lequel, dans le traitement de pondération, le processeur définit le premier poids, dans une unité de l'image de patch, pour une première perte qui est une perte pour chaque image de patch,
dans lequel, dans le traitement de détermination, le modèle d'apprentissage détecte la deuxième région unitaire appartenant à une classe spécifique,
dans lequel, dans le traitement de détermination, le processeur détermine que la deuxième région unitaire n'est pas correctement détectée dans un premier cas où la deuxième région unitaire appartenant à la classe spécifique est détectée par erreur par le modèle d'apprentissage et dans un deuxième cas où la deuxième région unitaire appartenant à la classe spécifique n'est pas détectable par le modèle d'apprentissage, et dans lequel, dans le traitement de pondération, le processeur définit un poids plus élevé dans le deuxième cas que dans le premier cas.

11. Support d'enregistrement non transitoire lisible par ordinateur sur lequel un programme pour amener un ordinateur à exécuter le procédé d'apprentissage selon l'une quelconque des revendications 1 à 9 est enregistré.

12. Appareil de traitement d'images comprenant :

un modèle entraîné qui a été entraîné par le procédé d'apprentissage selon l'une quelconque des revendications 1 à 9,
dans lequel le modèle entraîné est utilisé pour détecter une rayure et/ou un défaut d'un sujet à partir d'une image d'entrée.

# FIG. 1

# FIG. 2

100

102

| DATA ACQUISITION UNIT | ~104 |

| DETECTOR | ~106 |

| DETERMINATION UNIT | ~108 |

| WEIGHTING UNIT | ~110 |

| UPDATE UNIT | ~112 |

| DISPLAY CONTROL UNIT | ~114 |

| RECORDING CONTROL UNIT | ~116 |

| COMMUNICATION CONTROL UNIT | ~118 |

| ROM | ~130 |

| RAM | ~150 |

FIG. 3A

FIG. 3B

# FIG. 4

# FIG. 5

```
                    ┌─────────────┐
                    │    START    │
                    └──────┬──────┘
                           │
                           ▼
         ┌──────────────────────────────────┐
         │      ACQUIRE LEARNING DATA        │──S100
         └──────────────────┬───────────────┘
                            ▼
         ┌──────────────────────────────────┐
         │      PERFORM SEGMENTATION OF      │──S110
         │          PATCH IMAGE             │
         └──────────────────┬───────────────┘
                            ▼
         ┌──────────────────────────────────┐
         │  DETERMINE WHETHER OR NOT SPECIFIC│──S120
         │        CLASS IS DETECTED          │
         └──────────────────┬───────────────┘
                            ▼
         ┌──────────────────────────────────┐
         │        SET WEIGHT FOR LOSS        │──S130
         └──────────────────┬───────────────┘
                            ▼
         ┌──────────────────────────────────┐
         │      UPDATE LEARNING MODEL        │──S140
         └──────────────────┬───────────────┘
                            ▼
                                        S150
                  PROCESSING END?              No
                            │
                          Yes
                            ▼
                    ┌─────────────┐
                    │     END     │
                    └─────────────┘
```

## FIG. 6

```
┌ ─ ─ ─ ─ ─ ─ ─ ─ ─ ─ ─ ─ ┐
     FROM STEP S110
└ ─ ─ ─ ─ ─ ─ ─ ─ ─ ─ ─ ─ ┘
             │
             ▼
┌───────────────────────┐
│    DERIVE CERTAINTY    │──S112
└───────────────────────┘
             │
             ▼
┌───────────────────────┐
│ COMPARE CERTAINTY WITH │──S122
│    THRESHOLD VALUE     │
└───────────────────────┘
             │
             ▼
┌───────────────────────┐
│    CALCULATE CE LOSS   │──S131
└───────────────────────┘
             │
             ▼
┌───────────────────────┐
│ COMPARE CERTAINTY WITH │──S132
│  CORRECT ANSWER DATA   │
└───────────────────────┘
```

S133 — ERRONEOUSLY DETECTED OR NOT DETECTED?

No / Yes

S134 — $\alpha = 1$

S135 — $\alpha = 0$

DERIVE Lweighted — S138

DERIVE L — S139

S142 — TIMING TO UPDATE LEARNING MODEL?

No / Yes

UPDATE PARAMETER OF LEARNING MODEL — S144

```
┌ ─ ─ ─ ─ ─ ─ ─ ─ ─ ─ ─ ─ ┐
      TO STEP S150
└ ─ ─ ─ ─ ─ ─ ─ ─ ─ ─ ─ ─ ┘
```

# FIG. 7A

## FIG. 7B

920

920A

p = 0

q = 0

p = 1

q = 1

922

922A

## FIG. 8

```
        START
          │
          ▼
┌─────────────────────────┐
│  INPUT IMAGE AND CORRECT │ ~S102
│      ANSWER DATA         │
└─────────────────────────┘
          │
          ▼
┌─────────────────────────┐
│    SET DETECTION SIZE    │ ~S104
└─────────────────────────┘
          │
          ▼
┌─────────────────────────────────┐
│ DIVIDE INPUT IMAGE INTO PATCH    │ ~S106
│ IMAGES IN ACCORDANCE WITH        │
│ DETECTION SIZE                   │
└─────────────────────────────────┘
          │
          ▼
┌ ─ ─ ─ ─ ─ ─ ─ ─ ─ ─ ─ ─ ┐
     TO STEP S120
└ ─ ─ ─ ─ ─ ─ ─ ─ ─ ─ ─ ─ ┘
```

## FIG. 9

```
┌ ─ ─ ─ ─ ─ ─ ─ ─ ─ ┐
  FROM STEP S132
└ ─ ─ ─ ─ ─ ─ ─ ─ ─ ┘
          │
          ▼
       ╱ NOT ╲    S133A
      ╱ DETECTED? ╲──── No ───┐
       ╲        ╱              │
          Yes                  ▼
          │              ╱ ERRONEOUSLY ╲  S136
          │             ╱   DETECTED?    ╲──── No ────┐
          │              ╲              ╱             │
          │                   Yes                     │
          │                    │                      │
          ▼                    ▼                      ▼
    ┌─────────┐          ┌─────────┐            ┌─────────┐
    │ α = 2   │~S134A    │ α = 1   │~S137A      │ α = 0   │~S137B
    └─────────┘          └─────────┘            └─────────┘
          │                    │                      │
          ◄────────────────────┴──────────────────────┘
          │
          ▼
┌ ─ ─ ─ ─ ─ ─ ─ ─ ┐
  TO STEP S136
└ ─ ─ ─ ─ ─ ─ ─ ─ ┘
```

## FIG. 10A

900

## FIG. 10B

902    900

## FIG. 11A

910

## FIG. 11B

912

**EP 4 432 218 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2020061066 A

- JP 2020091543 A

### Non-patent literature cited in the description

- Automatic Defect Segmentation in X-Ray Images Based on Deep Learning. **DU WANGZHE et al.** IEEE TRANSACTIONS ON INDUSTRIAL ELECTRO-NICS. IEEE SERVICE CENTER, 21 December 2020, vol. 68

- MDD-Net: A novel defect detection model of material microscope image. **ZHOU WEIYU et al.** 2020 INTERNATIONAL CONFERENCE ON HIGH PERFORMANCE BIG DATA AND INTELLIGENT SYSTEMS (HPBD&IS). IEEE, 23 May 2020